# EUROPÄISCHE PATENTSCHRIFT

(11) **EP 2 569 393 B1**
(45) Veröffentlichungstag und Bekanntmachung des Hinweises auf die Patenterteilung: **22.02.2017**
(21) Anmeldenummer: 11718740.1
(22) Anmeldetag: 10.05.2011
(51) Int. Cl.: C09K 11/00, B42D 15/00, G06K 7/10, G06K 19/14, H04W 12/00, G06K 19/06

(54) **KOMBINATION VON LUMINESZENZSTOFFEN**
COMBINATION OF LUMINESCENT SUBSTANCES
COMBINAISON D'AGENTS LUMINESCENTS

(30) Priorität: 10.05.2010 DE 102010028818
(43) Veröffentlichungstag der Anmeldung: 20.03.2013
(73) Patentinhaber: Swiss Authentication Research and Development AG, 8274 Tägerwilen (CH)
(72) Erfinder: EBERT, Dieter, CH-8274 Gottlieben (CH)
(74) Vertreter: Weickmann & Weickmann PartmbB
(86) Internationale Anmeldenummer: PCT/EP2011/057528
(87) Internationale Veröffentlichungsnummer: WO 2011/141467

(56) Entgegenhaltungen:
- EP-A2- 1 346 839
- GB-A- 2 258 659
- JP-A- 9 052 479
- US-A1- 2004 079 800

## Beschreibung

Die Erfindung betrifft eine lumineszierende Zusammensetzung enthaltend eine durch Infrarot (IR)-Strahlung anregbare Komponente und eine durch Ultraviolett (UV)-Strahlung anregbare Komponente. Die Zusammensetzung weist ein charakteristisches Emissionsspektrum auf und kann gegebenenfalls zusammen mit einem an das Emissionsspektrum angepassten Auslesesystem zur Markierung von Stoffen oder Stoffgemischen eingesetzt werden.

Verbindungen, die Lanthanoidionen in der Oxidationsstufe +3 enthalten, sind oftmals Lumineszenzstoffe, die bei Anregung mit Strahlung im Infrarotbereich kürzerwelliges Licht, z.B. im sichtbaren Bereich und/oder im UV-Bereich emittieren. Diese als "Upconversion" oder "Antistokes Fluoreszenz" bezeichnete Eigenschaft kann darauf zurückgeführt werden, dass Elektronen der 4f-Schale von Lanthanoidionen bei Bestrahlung durch sequentielle Mehrfachanregung in einen Energiezustand angehoben werden, der ein gegenüber der Absorption eines einzigen Photons erhöhtes Niveau aufweist. Aus diesem Energiezustand kann bei Relaxation ein energiereicheres Photon als das ursprünglich absorbierte Photon emittiert werden.

Die Verwendung von Lanthanoidoxidsulfiden als Antistokes-Lumineszenzstoffe ist beispielsweise in WO 00/60527, WO 2008/000461 sowie in den US-Patenten 6 802 992 und 6 686 074 beschrieben. Weiterhin ist es bekannt, diese Lanthanoidoxidsulfide zur Markierung von Stoffen oder Stoffgemischen einzusetzen.

Gemäß vorliegender Erfindung werden neue lumineszierende Zusammensetzungen bereitgestellt, die zwei in verschiedenen Wellenlängenbereichen anregbare Komponenten (a) und (b) enthalten, wie in den Ansprüchen definiert. Komponente (a) ist eine durch IR-Strahlung anregbare Komponente, umfassend ein Oxid, Oxidsulfid oder Oxidfluorid von Yttrium und ein Oxid, Oxidsulfid oder Oxidfluorid von mindestens einem weiteren Element, ausgewählt aus Lanthan, Cer, Praseodym, Neodym, Samarium, Europium, Gadolinium, Terbium, Dysprosium, Holmium, Erbium, Thulium, Ytterbium und Lutetium, sowie ggf. mindestens einen Dotierstoff, ausgewählt aus Oxiden und/oder Fluoriden von Haupt- und Nebengruppenelementen. Das Oxid, Oxidsulfid oder Oxidfluorid von Yttrium liegt in einem Anteil von ≥ 85 mol-%, bezogen auf die gesamte Komponente (a), vor. Komponente (b) ist eine durch UV-Strahlung anregbare Komponente, bei der es sich günstigerweise um eine unter Umgebungsbedingungen inerte anorganische Verbindung, z.B. ein gegebenenfalls dotiertes Aluminat, handelt, das im UV-Wellenlängenbereich absorbiert und eine für die Verbindung charakteristische Lumineszenzstrahlung, z.B. Fluoreszenzstrahlung, emittiert.

Ein Gegenstand der Erfindung ist somit eine lumineszierende Zusammensetzung, enthaltend
(a) eine durch IR-Strahlung anregbare Komponente, wie vorstehend definiert, und
(b) eine durch UV-Strahlung anregbare Komponente.

Komponente (a) der Zusammensetzung ist vorzugsweise ein Lumineszenzstoff mit "Upconverter"- und/oder "Antistokes"-Eigenschaften. Vorzugsweise enthält die Komponente (a) ein Oxid, Oxidsulfid oder Oxidfluorid von Yttrium und ein Oxid, Oxidsulfid oder Oxidfluorid von mindestens zwei oder mindestens drei weiteren Elementen ausgewählt aus Lanthan, Cer, Praseodym, Neodym, Samarium, Europium, Gadolinium, Terbium, Dysprosium, Holmium, Erbium, Thulium, Ytterbium und Lutetium sowie gegebenenfalls mindestens einen Dotierstoff, ausgewählt aus Oxiden und/oder Fluoriden von Haupt- oder

Nebengruppenelementen. Beispielsweise handelt es sich bei Komponente (a) um einen Lumineszenzstoff wie in WO 2008/000461 beschrieben, uaf deren Offenbarung hiermit ausdrücklich Bezug genommen wird.

Im nächstliegenden Stand der Technik GB2258659 A ist z.B. in Beispiel 10 eine ähnliche lumineszierende Zusammensetzung offenbart.

In der gesamten Komponente (a) liegt das Oxid, Oxidsulfid oder Oxidfluorid von Yttrium in einem Anteil von ≥ 85 mol-%, vorzugsweise ≥ 90 mol-%, ≥ 92 mol-%, ≥ 94 mol-% oder ≥ 96 mol-% vor. Weitere Oxide, Oxidsulfide oder Oxidfluoride liegen vorzugsweise in einem Anteil von jeweils bis zu
5 mol-%, bis zu 3,5 mol-% oder bis zu 2 mol-% bezogen auf die gesamte Komponente (a) vor. Vorzugsweise sind die weiteren Oxide, Oxidsulfide oder Oxidfluoride ausgewählt aus den Oxiden, Oxidsulfiden oder Oxidfluoriden von Erbium, Ytterbium und von mindestens einem weiteren Element, insbesondere von Lutetium, Gadolinium, Holmium, Thulium, Dysprosium und/oder Europium. Die Oxide, Oxidsulfide oder Oxidfluoride von Erbium und Ytterbium liegen vorzugsweise in einem Anteil von jeweils 0,5-2 mol-%, besonders bevorzugt von 1-2 mol-% bezogen auf die gesamte Komponente (a) vor. Die weiteren Oxide, Oxidsulfide oder Oxidfluoride werden vorzugsweise in geringeren Anteilen von beispielsweise 0,1-1 mol-%, besonders bevorzugt 0,1-0,5 mol-% bezogen auf die gesamte Komponente (a) verwendet.

Die Komponente (a) der Zusammensetzung enthält neben dem Oxid, Oxidsulfid oder Oxidfluorid von Yttrium noch Oxide, Oxidsulfide oder Oxidfluoride von 1, 2, 3, 4, 5, 6, 7 oder noch mehr weiteren Elementen.

Komponente (a) der erfindungsgemäßen Zusammensetzung enthält zusätzlich mindestens einen Dotierstoff ausgewählt aus Oxiden und/oder Fluoriden von Haupt- oder Nebengruppenelementen. Die Dotierstoffe liegen vorzugsweise in einem Anteil jeweils bis zu 5 mol-%, besonders bevorzugt von jeweils bis zu 2 mol-%, noch mehr bevorzugt von jeweils bis zu 1 mol-%, noch mehr bevorzugt von 0,05-1 mol-% und am meisten bevorzugt von 0,1-0,2 mol-% bezogen auf die gesamte Komponente (a) vor.

Ein bevorzugter Dotierstoff ist ein Fluorid, das beispielsweise als ein Erdalkalimetallfluorid oder als Alkalimetallfluorid, z.B. als Kaliumfluorid, eingesetzt werden kann. Das Fluorid liegt vorzugsweise in einem Anteil 0,1-0,2 mol-% bezogen auf die gesamte Komponente (a) vor.

Weitere bevorzugte Dotierstoffe sind Erdalkalimetalle und/oder Nebengruppenelemente, die als zweifach oder noch höher positiv geladene Kationen, vorzugsweise in Form von Oxiden und/oder Fluoriden vorliegen. Nebengruppenelemente, die als zweifach oder noch höher positiv geladene Kationen, vorzugsweise in Form von Oxiden und/oder Fluoriden vorliegen. Besonders bevorzugte Dotierstoffe sind Calcium, Zink und/oder Titan, beispielsweise in Form der Oxide Calciumoxid, Zinkoxid bzw. Titandioxid. Die kationischen Dotierstoffe liegen vorzugsweise in einem Anteil von jeweils 0,1-0,2 mol-% bezogen auf die gesamte Komponente (a) vor.

Die IR-anregbare Komponente (a) der lumineszierenden Zusammensetzung zeichnet sich einerseits durch eine hohe Lumineszenzintensität und andererseits durch Emissionslinien bzw. -peaks aus, die für das Vorhandenseins und die Anteile der einzelnen Anteile charakteristisch sind. So können durch spezifische Kombinationen von Oxiden, Oxidsulfiden oder Oxidfluoriden mit Dotierstoffen eine praktisch unbegrenzte Zahl verschiedener Emissionsspektren erzeugt werden.

Komponente (a) der erfindungsgemäßen Zusammensetzung kann wie in WO 2008/000461 beschrieben hergestellt werde. Der Zusatz von Dotierstoffen, z.B. von mehrwertigen Kationen und/oder Fluorid, bewirkt drastische Veränderungen der Lage und/oder Intensität einzelner Emissionswellenlängen. Ferner wird auch eine starke Erhöhung der Lumineszenz-Gesamtintensität gefunden. Es wird angenommen, dass zusätzlich zu der bei Anti-Stokes Materialien bekannten Zweiphotonenabsorption auch eine Dreiphotonenabsorption stattfindet.

Komponente (b) der erfindungsgemäßen Zusammensetzung ist eine durch UV-Strahlung anregbare Komponente, die nach Anregung eine charakteristische Lumineszenzstrahlung emittiert. Es handelt sich dabei vorzugsweise um ein Aluminat, das gegebenenfalls mit Übergangsmetall- und/oder Lanthanoidionen dotiert ist. Vorzugsweise enthält Komponente (b) ein Aluminat von Erdalkalimetallionen, Übergangsmetallionen und/oder Lanthanoidionen, vorzugsweise ein Aluminat von Barium oder Magnesium oder ein Aluminat von Yttrium, gegebenenfalls dotiert mit Eu-, Mn-, Th- und/oder Cr-Ionen. Durch Einstellung der Stöchiometrie von Erdalkalimetall-, Übergangsmetall- und/oder Lanthanoidionen im Aluminat kann die Lage und/oder Intensität der Emissionswellenlängen variiert werden. Durch Dotierung mit Übergangsmetall- und/oder Lanthanoidionen wird die UV-Sensibilität gesteigert. Der Dotierstoff der Komponente (b) liegt günstigerweise in einem Anteil von bis zu 10 mol-%, bis zu 5 mol-% oder bis zu 1 mol-% bezogen auf die gesamte Komponente (b) vor.

Die Komponente (b) liegt günstigerweise in einem Gesamtanteil von 1-30 %, 5-20 % oder 8-12 % bezogen auf das Gesamtgewicht der Komponenten (a) und (b) vor.

Die Komponenten (a) und/oder (b) liegen in der erfindungsgemäßen lumineszenten Zusammensetzung vorzugsweise in kristalliner Form vor. Weiterhin ist bevorzugt, dass die einzelnen Komponenten aus einer einzigen Phase, beispielsweise einer kristallinen Phase bestehen, die durch röntgendiffraktometrische Methoden bestimmt werden kann. Besonders bevorzugt liegt die Komponente (a) in hexagonal kristalliner Form vor. Gegebenenfalls können die einzelnen Komponenten (a) und/oder (b) auch jeweils aus einer Mischung mehrerer Lumineszenzstoffe bestehen.

Die Zusammensetzung liegt üblicherweise in Form von Partikeln vor, wobei die mittlere Partikelgröße ≥5 nm, insbesondere ≥ 1 nm ist. Vorzugsweise liegt die Partikelgröße im Bereich von 50 nm-100 µm, vorzugsweise von 50 nm-50 µm und besonders bevorzugt von etwa 100 nm-10 µm.

Die Komponenten (a) und (b) liegen in der Zusammensetzung vorzugsweise in einer im wesentlichen homogenen Verteilung, z.B. als homogene Verteilung von Partikeln, insbesondere von kristallinen Partikeln wie zuvor beschrieben, vor. Diese homogene Verteilung kann durch gemeinsames Mahlen der Komponenten in üblichen Mahlvorrichtungen, z.B. Kugelmühlen, erreicht werden.

Die erfindungsgemäßen Lumineszenzstoffe können als Nachweis- und Markierungsstoffe, beispielsweise als Sicherheitsmarkierungen von Stoffen oder Stoffgemischen, verwendet werden. Auf diese Weise kann die Echtheit von Produkten oder Dokumenten bestimmt werden. Der Lumineszenzstoff kann, da er chemisch inert ist, in beliebige feste und/oder flüssige Stoffe oder Stoffgemische eingebracht oder darauf aufgebracht werden. Beispielsweise kann der Lumineszenzstoff Trägersubstanzen, wie etwa Lacke, Toner, Tinten, Farben etc., oder in Produkte, wie Kunststoffe, Metalle, Glas, Silikone, Papier, Gummi, Medikamente etc., aufgebracht bzw. eingebracht werden. So können beispielsweise Gegenstände mit einer Auflage des Lumineszenzstoffes auf ihrer Oberfläche oder Teilen davon versehen werden, die eine Schichtdicke von beispielsweise 1-10 µm, bevorzugt 1-5 µm aufweisen. Vorzugsweise wird der Lumineszenzstoff dem Produkt oder einem Teil des Produkts in einem Anteil von 20-2000 ppm, vorzugsweise 50-200 ppm, hinzugesetzt. Auch zum Einsatz in biologischen Systemen, z.B. Zellkulturen, Proben aus Körperflüssigkeiten bzw. Gewebeschnitten oder als Kontrastmittel, ist der erfindungsgemäße Lumineszenzstoff geeignet. Dabei kann der Lumineszenzstoff in nano- oder mikropartikulärer Form an biologische Nachweisreagenzien gekoppelt werden. Weiterhin können die Oberflächen von Partikeln des Lumineszenzstoffes mit Deodetominen oder anderen Haftsubstanzen modifiziert werden, um die Suspendierungseigenschaften z.B. in organischen Flüssigkeiten wie etwa Ölen, Benzinen, Flüssiggasen etc., in wässrigen Flüssigkeiten wie etwa Körperflüssigkeiten, in wässrigorganischen Flüssigkeitssystemen und fließfähigen Pulvern wie etwa Tonern, zu verbessern. Je kleiner die Partikel sind, desto geringer ist ihre Neigung zur Sedimentation. Durch intensives Mahlen kann z.B. die Partikelgröße soweit, z.B. auf ≤ 100 nm verringert werden, dass auch ohne Zusatz von Haftsubstanzen eine stabile Suspension der Partikel in Flüssigkeiten erreicht wird.

Eine Fälschungssicherheit der Markierung ist dadurch gegeben, dass die für den jeweiligen Lumineszenzstoff charakteristischen Emissionslinien eine kryptografischen Schlüssel darstellen, die mit einem an den jeweiligen Stoff angepassten Detektor, d.h. dem Schloss, nachgewiesen werden können.

Die erfindungsgemäße Zusammensetzung enthält wie vorstehend definiert zwei Komponenten, die durch Strahlung in unterschiedlichen Wellenlängenbereichen zur Lumineszenz angeregt werden können. Vorzugsweise kann die Komponente (a) mit IR-Strahlung im Bereich von 850-1500 nm, insbesondere von 920-1000 nm, zur Lumineszenz angeregt werden und/oder die Komponente (b) mit UV-Strahlung im Bereich von 350-420 nm, insbesondere von 380-410 nm, zur Lumineszenz angeregt werden.

Der Nachweis des Vorhandenseins des Lumineszenzstoffes in einem Gegenstand erfolgt durch Bestrahlung mit zwei Wellenlängen. Zur Anregung der Komponente (a) wird eine erste Wellenlänge im Infrarotbereich, insbesondere mit IR-monokohärentem Laserlicht oder mit einer IR-Leuchtdiode mit Wellenlängen zwischen etwa 850 nm und 1500 nm, vorzugsweise zwischen etwa 920 nm und 1000 nm, besonders bevorzugt zwischen etwa 950 nm und 1000 nm, am meisten bevorzugt zwischen 920 nm und 985 nm verwendet, wobei die Komponente (a) angeregt und die resultierende Emissionsstrahlung etwa im Bereich zwischen 300 nm und 1700 nm, insbesondere zwischen 350 nm und 1000 nm nachgewiesen wird. Die Bestrahlung von Komponente (a) erfolgt vorzugsweise mit einer Leistung von 1-200 mW, insbesondere 10-80 mW.

Zur Anregung der Komponente (b) wird eine zweite Wellenlänge im UV-Bereich, insbesondere mit UV-monokohärentem Laserlicht oder mit einer UV-Leuchtdiode mit Wellenlängen zwischen etwa 350 nm und 450 nm, vorzugsweise zwischen etwa 380 nm und 400 nm verwendet, wobei die Komponente (b) angeregt und die Emissionsstrahlung durch z.B. Fluoreszenz etwa im Bereich zwischen 300 nm und 1700 nm, insbesondere zwischen 350 nm und 1000 nm nachgewiesen wird. Die Bestrahlung von Komponente (b) erfolgt vorzugsweise mit einer Leistung von 2-50 mW, insbesondere 5-30 mW.

Bevorzugt ist, dass die Komponenten (a) und (b) der Zusammensetzung durch Bestrahlung mit einer Wellenlänge im IR-Bereich und durch Bestrahlung mit einer Wellenlänge im UV-Bereich jeweils separat zur Lumineszenz angeregt werden und die Emissionsstrahlung der Komponenten (a) und (b) separat nachgewiesen wird. Hierzu kann die Anregung von Komponente (a) und Komponente (b) sequenziell, d.h. zu unterschiedlichen Zeiten erfolgen, wobei vorzugsweise zunächst die Komponente (a) und anschließend die Komponente (b) angeregt wird.

In einer bevorzugten Ausführungsform der Erfindung kann die Emissionsstrahlung der Komponenten (a) und (b) digital nachgewiesen werden. Dabei können digitalisierte Signale der von den Komponenten (a) und (b) stammenden Signale oder Teile dieser Signale (z.B. Signale einzelner Peaks) durch kryptografische Maßnahmen unter Anwendung geeigneter Algorithmen in eine neues Signal umgewandelt werden. Durch Kombination dieser von zwei verschiedenen Komponenten stammenden Signale kann die Datendichte um eine Faktor von bis zu etwa 10⁴ erhöht werden.

Ein weiterer Gegenstand der Erfindung ist ein Auslesesystem zum Nachweis einer Lumineszenzmarkierung umfassend eine erfindungsgemäße Zusammensetzung in einem Stoff oder Stoffgemisch, enthaltend:
(i) eine erste Strahlenquelle im IR-Bereich,
(ii) eine zweite Strahlenquelle im UV-Bereich,
(iii) gegebenenfalls einen Kontaktsensor zur Aktivierung der ersten und zweiten Strahlenquelle bei Kontakt des Auslesesystems mit einem Stoff oder Stoffgemisch und
(iv) mindestens ein optisches Detektionselement für den selektiven Nachweis von spezifischen Emissionslinien oder Lumineszenzmarkierung.

Die erste und zweite Strahlenquelle sind vorzugsweise jeweils ein IR- und UV-Laser. Das Auslesesystem enthält vorzugsweise weiterhin einen Kontaktsensor, z.B. einen optischen Kontaktsensor, der die erste und zweite Strahlenquelle steuert, so dass eine Aktivierung der Strahlenquelle nur bei Kontakt des Auslesesystems mit einer zu bestimmenden Probe erfolgt. Die Bestrahlung des den Lumineszenzstoff enthaltenden Produkts durch das Auslesesystem kann direkt mit einem Lichtwellenleiter oder einem anderen optisch relevanten Transfermedium, z.B. einem optischen Feststoffkörper, einem Fluid, Gas etc., erfolgen. Die Detektion kann visuell oder mittels Detektoren erfolgen.

Es können beispielsweise Lichtwellenleiter verwendet werden, deren Köpfe als Sammellinse geschliffen sind, so dass eingestrahltes Licht (IR- bzw. UV-Licht) und vom Lumineszenzstoff emittiertes Licht (spezifisches Emissionsspektrum) eine Einheit bilden und im gleichen Punkt fokussiert sein können. Ein Vorteil dabei ist, dass keine mechanische Dejustierung zwischen Empfänger und Sender erfolgen kann. Der Dämpfungsfaktor des Lichtwellenleiters, z.B. aus Glas oder Kunststoff, kann variieren, wobei der Übergang von den optischen Bauelementen (Strahlungsquelle bzw. Detektionselement) zum Lichtwellenleiter kovisionsarm angebracht ist. Die Länge des Lichtwellenleiters kann variieren und liegt typischerweise zwischen 1 cm und 50 cm.

Das Auslesesystem enthält weiterhin ein oder mehrere optische Detektionselemente, die für den selektiven Nachweis von spezifischen Emissionslinien des Lumineszenzstoffs, z.B. hinsichtlich der Wellenlänge und/oder Intensität, vorgesehen sind. Die Detektionselemente können beispielsweise Dioden, Fotoelemente oder elektronische Detektoren sein. Vorzugsweise werden Detektormatrices mit mehreren, vorzugsweise unterschiedlich eingestellten Detektoren verwendet, z.B. Dioden-, Fotoelemente- oder CCD-Matrices. Die Detektoren bzw. einzelne Detektoren der Detektormatrix können mit einem Spektrometer und/oder optischen Filtern, z.B. Bandpassfiltern, kombiniert werden.

Das Auslesesystem kann außerdem gegebenenfalls eine programmierbare elektronische Einheit enthalten, die eine digitale Auswertung und Aufbereitung des Messsignals ermöglicht.

Das erfindungsgemäße Auslesesystem wird in Verbindung mit einer aus zwei Komponenten (a) und (b) wie zuvor beschrieben bestehenden lumineszenten Zusammensetzung verwendet.

Noch ein weiterer Gegenstand der Erfindung ist ein Verfahren zum Nachweis einer Lumineszenzmarkierung umfassend eine erfindungsgemäße Zusammensetzung in einem Stoff oder Stoffgemisch, umfassend die Schritte:
(a) Bereitstellen eines Stoffes oder Stoffgemisches, der/das auf das Vorhandensein einer lumineszierenden Zusammensetzung enthaltend die Komponenten (a) und (b) wie zuvor beschrieben, getestet werden soll,
(b) Bestrahlen des Stoffes oder Stoffgemisches mit einer ersten Strahlungsquelle im IR-Bereich und einer zweiten Strahlungsquelle im UV-Bereich, um Emissionsstrahlung von IR- und UV-anregbaren Komponenten der Lumineszenzmarkierung zu erzeugen,
(c) separates Nachweisen der erzeugten Emissionsstrahlungen und
(d) Bestimmen eines Messsignals aus den nachgewiesenen Emissionsstrahlungen oder eines daraus durch kryptografische Maßnahmen gewonnenen Signals und gegebenenfalls Vergleichen des Signals mit einem vorgegebenen Muster.

Vorzugsweise erfolgt in Schritt (b) zunächst die Bestrahlung im IR-Bereich und anschließend die Bestrahlung im UV-Bereich. Vorzugsweise umfasst Schritt (d) eine digitale Aufbereitung des Messsignals oder Teilen davon.

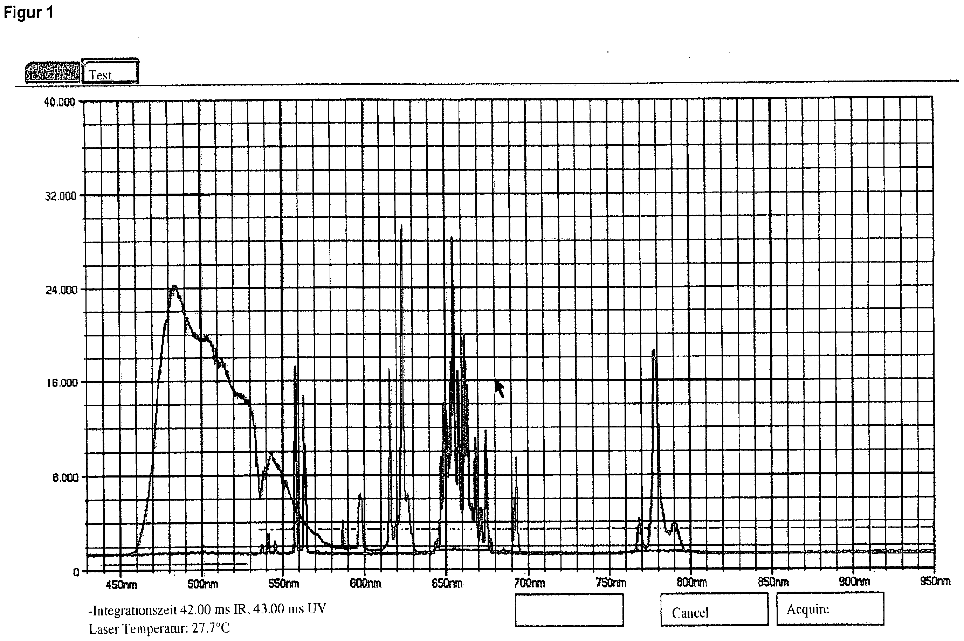

In **Figur 1** ist das Spektrum einer erfindungsgemäßen lumineszierenden Zusammensetzung gezeigt. Die von Komponente (a) stammenden Emissionslinien sind in weißer Farbe eingezeichnet, während von Komponente (b) stammende Emissionslinien in blauer Farbe eingezeichnet sind. Durch digitale Kombination der Einzelsignale oder Teilen davon kann mittels kryptografischer Methoden ein neues Signal erzeugt werden, das für ein sehr hohes Maß an Verifikationssicherheit sorgt.

## Patentansprüche

1. Lumineszierende Zusammensetzung, enthaltend
(a) eine durch IR-Strahlung anregbare Komponente, umfassend zumindest ein Oxid, Oxidsulfid oder Oxidfluorid von Lanthanoidionen, und
(b) eine durch UV-Strahlung anregbare Komponente,
**dadurch gekennzeichnet,**
**dass** die Komponente (a) ein Oxid, Oxidsulfid oder Oxidfluorid von Yttrium und ein Oxid, Oxidsulfid oder Oxidfluorid von mindestens einem weiteren Element ausgewählt aus Lanthan, Cer, Praseodym, Neodym, Samarium, Europium, Gadolinium, Terbium, Dysprosium, Holmium, Erbium, Thulium, Ytterbium und Lutetium sowie gegebenenfalls mindestens einen Dotierstoff, ausgewählt aus Oxiden und/oder Fluoriden von Haupt- oder Nebengruppenelementen, enthält, wobei das Oxid, Oxidsulfid oder Oxidfluorid von Yttrium in einem Anteil von ≥ 85 mol-% bezogen auf die gesamte Komponente (a) vorliegt.

2. Lumineszierende Zusammensetzung nach Anspruch 1,
**dadurch gekennzeichnet,**
**dass** die weiteren Oxide, Oxidsulfide oder Oxidfluoride in einem Anteil von jeweils bis zu 5 mol-%, bis zu 3,5 mol-% oder bis zu 2 mol-% bezogen auf die gesamte Komponente (a) vorliegen.

3. Zusammensetzung nach Anspruch 2,
**dadurch gekennzeichnet,**
**dass** die weiteren Oxide, Oxidsulfide oder Oxidfluoride ausgewählt sind aus Oxidsulfiden oder Oxidfluoriden von Erbium, Ytterbium und von mindestens einem weiteren Element, insbesondere von Lutetium, Gadolinium, Holmium, Thulium, Dysprosium und/oder Europium.

4. Zusammensetzung nach einem der Ansprüche 2 oder 3, **dadurch gekennzeichnet, dass** sie ein Fluorid als Dotierstoff enthält,
und/oder dass sie ein Erdalkalimetall und/oder ein Nebengruppenelement, vorzugsweise Calcium, Zink und/oder Titan, als Dotierstoff enthält,
wobei die Dotierstoffe insbesondere in einem Anteil von jeweils bis zu 1 mol-% bezogen auf die gesamte Komponente (a) vorliegen.

5. Zusammensetzung nach einem der Ansprüche 1 bis 4,
**dadurch gekennzeichnet,**
**dass** die Komponente (b) ein Aluminat, gegebenenfalls dotiert mit Übergangsmetall- und/oder Lanthanoidionen, enthält,
insbesondere ein Aluminat von Erdalkalimetallionen, Übergangsmetallionen und/oder Lanthanoidionen, vorzugsweise ein Aluminat von Barium oder Magnesium oder ein Aluminat von Yttrium, gegebenenfalls dotiert mit Eu-, Mn-, Th- und/oder Cr-Ionen, enthält.

6. Zusammensetzung nach einem der Ansprüche 1 bis 5,
**dadurch gekennzeichnet,**
**dass** die Komponente (b) in einem Gewichtsanteil von 1-30 %, 5-20 % oder 8-12 % bezogen auf das Gesamtgewicht von (a) und (b) vorliegt.

7. Zusammensetzung nach einem der Ansprüche 1-6, **dadurch gekennzeichnet, dass** die Komponenten (a) und/oder (b) in kristalliner Form vorliegen,
und/oder dass die Komponenten (a) und (b) in Form von Partikeln, insbesondere mit einer mittleren Partikelgröße von 50 nm-100 µm vorliegen.

8. Zusammensetzung nach einem der Ansprüche 1-7, **dadurch gekennzeichnet, dass** die Komponente (a) mit IR-Strahlung im Bereich von 850-1500 nm, insbesondere von 920-1000 nm, zur Lumineszenz angeregt werden kann
und/oder die Komponente (b) mit UV-Strahlung im Bereich von 350-420 nm, insbesondere von 380-410 nm, zur Lumineszenz angeregt werden kann.

9. Verwendung einer lumineszierenden Zusammensetzung nach einem der Ansprüche 1 bis 8 zur Markierung von Stoffen oder Stoffgemischen, wobei insbesondere mindestens eine lumineszierende Zusammensetzung als Mischung oder als Muster in den Stoff oder das Stoffgemisch eingebracht oder darauf aufgebracht wird.

10. Verfahren zum Nachweis des Vorhandenseins einer lumineszierenden Zusammensetzung, umfassend die Schritte
(i) Verwendung einer lumineszierenden Zusammensetzung nach einem der Ansprüche 1-8 zur Markierung von Stoffen oder Stoffgemischen, wobei insbesondere mindestens eine lumineszierende Zusammensetzung als Mischung oder als Muster in den Stoff oder das Stoffgemisch eingebracht oder darauf aufgebracht wird, und
(ii) Nachweis des Vorhandenseins der lumineszierenden Zusammensetzung, wobei insbesondere eine lumineszierende Zusammensetzung mit einem charakteristischen Emissionsspektrum durch ein daran angepasstes Auslesesystem nachgewiesen wird.

11. Verfahren nach Anspruch 10,
**dadurch gekennzeichnet,**
**dass** die Komponenten (a) und (b) der Zusammensetzung durch Bestrahlung mit einer Wellenlänge im IR-Bereich und durch Bestrahlung mit einer Wellenlänge im UV-Bereich jeweils separat zur Lumineszenz angeregt werden und die Emissionsstrahlung der Komponenten (a) und (b) separat nachgewiesen wird,
wobei die Komponente (a) vorzugsweise durch Bestrahlung mit einer Wellenlänge im Bereich von etwa 850-1500 nm, insbesondere von etwa 920-1000 nm, angeregt wird
und/oder die Komponente (b) vorzugsweise durch Bestrahlung mit einer Wellenlänge im Bereich von 350-450, insbesondere von 380-410 nm angeregt wird, und wobei die Emissionsstrahlung vorzugsweise in einem Bereich von 300-1700 nm, insbesondere von 350-1000 nm, nachgewiesen wird.

12. Verfahren nach Anspruch 11,
**dadurch gekennzeichnet,**
**dass** die Komponente (a) durch Bestrahlung mit einem IR-Laser, insbesondere mit einer Leistung von 10-100 mW, angeregt wird und/oder dass die Komponente (b) durch Bestrahlung mit einem UV-Laser, insbesondere mit einer Leistung von 5-30 mW, angeregt wird.

13. Verfahren nach Anspruch 11 oder 12, **dadurch gekennzeichnet, dass** die Bestrahlung der Komponente (a) und Komponente (b) sequenziell erfolgt, wobei vorzugsweise zuerst die Komponente (a) und anschließend die Komponente (b) bestrahlt wird.

14. Auslesesystem zum Nachweis einer Lumineszenzmarkierung umfassend eine Zusammensetzung nach einem der Ansprüche 1-8 in einem Stoff oder Stoffgemisch, enthaltend:
(i) eine erste Strahlenquelle im IR-Bereich,
(ii) eine zweite Strahlenquelle im UV-Bereich,
(iii) gegebenenfalls einen Kontaktsensor zur Aktivierung der ersten und zweiten Strahlenquelle bei Kontakt des Auslesesystems mit einem Stoff oder Stoffgemisch und
(iv) mindestens ein optisches Detektionselement für den selektiven Nachweis von spezifischen Emissionslinien oder Lumineszenzmarkierung, wobei das Detektionselement insbesondere ein CCD-Modul gekoppelt mit einem Spektrometer umfasst.

15. Verfahren zum Nachweis einer Lumineszenzmarkierung umfassend eine Zusammensetzung nach einem der Ansprüche 1-8 in einem Stoff oder Stoffgemisch, umfassend die Schritte:
(a) Bereitstellen eines Stoffes oder Stoffgemisches, der/das auf das Vorhandensein einer Lumineszenzmarkierung umfassend eine lumineszierende Zusammensetzung nach einem der Ansprüche 1 bis 8, getestet werden soll,
(b) Bestrahlen des Stoffes oder Stoffgemisches mit einer ersten Strahlungsquelle im IR-Bereich und einer zweiten Strahlungsquelle im UV-Bereich, um Emissionsstrahlung von IR-und UV-anregbaren Komponenten der Lumineszenzmarkierung zu erzeugen,
(c) separates Nachweisen der erzeugten Emissionsstrahlungen und
(d) Bestimmen eines Messsignals aus den nachgewiesenen Emissionsstrahlungen oder eines daraus durch kryptografische Maßnahmen gewonnenen Signals und gegebenenfalls Vergleichen des Signals mit einem vorgegebenen Muster.

16. Stoff oder Stoffgemisch, in das eine lumineszente Zusammensetzung nach einem der Ansprüche 1-8 eingebracht oder darauf aufgebracht ist.

17. Stoff oder Stoffgemisch nach Anspruch 17,
wobei die Zusammensetzung nach einer Ansprüche 1-8 in einem Anteil von 10-2000 ppm im Stoff oder Stoffgemisch enthalten ist.

## Claims

1. Luminescent composition comprising
(a) a component which can be excited by IR radiation and which comprises at least one oxide, oxide sulphide or oxide fluoride of lanthanoid ions and
(b) a component which can be excited by UV radiation,
**characterised in that**
the component (a) comprises an oxide, oxide sulphide or oxide fluoride of yttrium and an oxide, oxide sulphide or oxide fluoride of at least one additional element selected from lanthanum, cerium, praseodymium, neodymium, samarium, europium, gadolinium, terbium, dysprosium, holmium, erbium, thulium, ytterbium and lutetium and optionally at least one dopant selected from oxides and/or fluorides of main or auxiliary group elements,
the oxide, oxide sulphide or oxide fluoride of yttrium being present in a proportion of ≥ 85 mol% based on the total component (a).

2. Luminescent composition according to claim 1,
**characterised in that**
the additional oxides, oxide sulphides or oxide fluorides are present in a proportion of up to 5 mol%, up to 3.5 mol% or up to 2 mol% based on the total component (a).

3. Composition according to claim 2,
**characterised in that** the additional oxides, oxide sulphides or oxide fluorides are selected from oxide sulphides or oxide fluorides of erbium, ytterbium and of at least one additional element, in particular lutetium, gadolinium, holmium, thulium, dysprosium and/or europium.

4. Composition according to either claim 2 or claim 3,
**characterised in that**
it comprises a fluoride as dopant,
and/or **in that** it comprises an alkaline earth metal and/or an auxiliary group element, preferably calcium, zinc and/or titanium, as dopant,
the dopants being present in each case in particular in a proportion of up to 1 mol% based on the total component (a).

5. Composition according to any one of claims 1 to 4,
**characterised in that** the component (b) comprises an aluminate, optionally doped with transition metal and/or lanthanoid ions,
in particular said component (b) comprises an aluminate of alkaline earth metal ions, transition metal ions and/or lanthanoid ions, preferably an aluminate of barium or magnesium or an aluminate of yttrium, optionally doped with Eu, Mn, Th and/or Cr ions.

6. Composition according to any one of claims 1 to 5,
**characterised in that**
the component (b) is present in a weight proportion of from 1 to 30%, from 5 to 20% or from 8 to 12% based on the total weight of (a) and (b).

7. Composition according to any one of claims 1 to 6,
**characterised in that** the components (a) and/or (b) are present in crystalline form,
and/or **in that** the components (a) and (b) are present in the form of particles, in particular having a mean particle size of from 50 nm to 100 µm.

8. Composition according to any one of claims 1 to 7, **characterised in that** the component (a) can be excited to luminescence with IR radiation in the range from 850 nm to 1500 nm, in particular from 920 nm to 1000 nm,
and/or the component (b) can be excited to luminescence with UV radiation in the range from 350 to 420 nm, in particular from 380 to 410 nm.

9. Use of a luminescent composition according to any one of claims 1 to 8 in order to mark substances or mixtures of substances,
in particular at least one luminescent composition in the form of an admixture or a pattern being introduced into or applied to the substance or the mixture of substances.

10. Method for identifying the presence of a luminescent composition, comprising the steps of
(i) using a luminescent composition according to any one of claims 1 to 8 for marking substances or mixtures of substances, in particular at least one luminescent composition in the form of an admixture or a pattern being introduced into or applied to the substance or the mixture of substances, and
(ii) identifying the presence of the luminescent composition, in particular a luminescent composition having a characteristic emission spectrum being identified by a reading system adapted thereto.

11. Method according to claim 10,
**characterised in that** the components (a) and (b) of the composition are in each case excited to luminescence separately by irradiation at a wavelength in the IR range and by irradiation at a wavelength in the UV range and the emission radiation of the components (a) and (b) is identified separately,
the component (a) preferably being excited by irradiation at a wavelength in the range from approximately 850 nm to 1500 nm, in particular from approximately 920 nm to 1000 nm, and/or
the component (b) preferably being excited by irradiation at a wavelength in the range from 350 to 450 nm, in particular from 380 to 410 nm, and the emission radiation preferably being identified in a range from 300 to 1700 nm, in particular from 350 to 1000 nm.

12. Method according to claim 11,
**characterised in that**
the component (a) is excited by irradiation with an IR laser, in particular having a power of from 10 to 100 mW,
and/or **in that** the component (b) is excited by irradiation with a UV laser, in particular having a power of from 5 to 30 mW.

13. Method according to either claim 11 or claim 12, **characterised in that** the irradiation of the component (a) and component (b) is carried out sequentially, the component (a) preferably being irradiated first and the component (b) being irradiated subsequently.

14. Reading system for identifying a luminescent marking, comprising a composition according to one of claims 1 to 8, in a substance or mixture of substances, comprising:
(i) a first radiation source in the IR range,
(ii) a second radiation source in the UV range,
(iii) optionally a contact sensor for activating the first and second radiation source in the event of contact of the reading system with a substance or mixture of substances and
(iv) at least one optical detection element for selectively identifying specific emission lines or luminescent marking, the detection element comprising in particular a CCD module coupled to a spectrometer.

15. Method for identifying a luminescent marking comprising a composition according to any one of claims 1 to 8 in a substance or mixture of substances comprising the steps of:
(a) providing a substance or mixture of substances which is to be tested for the presence of a luminescent marking comprising a luminescent composition according to any one of claims 1 to 8,
(b) irradiating the substance or mixture of substances with a first radiation source in the IR range and a second radiation source in the UV range in order to produce emission radiation of IR and UV-excitable components of the luminescent marking,
(c) separately identifying the emission radiations produced and
(d) determining a measurement signal from the identified emission radiations or a signal obtained therefrom by cryptographic means and optionally comparing the signal with a predetermined pattern.

16. Substance or mixture of substances into or to which a luminescent composition according to any one of claims 1 to 8 is introduced or applied.

17. Substance or mixture of substances according to claim 17, wherein the composition according to any one of claims 1 to 8 is contained in said substance or mixture of substances in a proportion of from 10-2000 ppm.

## Revendications

1. Composition luminescente, contenant
(a) un composant excitable par un rayonnement IR, comprenant au moins un oxyde, un sulfure d'oxyde ou un fluorure d'oxyde d'ions lanthanides, et
(b) un composant excitable par un rayonnement UV,
**caractérisée en ce**
**que** le composant (a) contient un oxyde, un sulfure d'oxyde ou un fluorure d'oxyde d'yttrium et un oxyde, un sulfure d'oxyde ou un fluorure d'oxyde d'au moins un autre élément choisi parmi le lanthane, le cérium, le praséodyme, le néodyme, le samarium, l'europium, le gadolinium, le terbium, le dysprosium, l'holmium, l'erbium, le thulium, l'ytterbium et le lutétium ainsi que, éventuellement, au moins une substance dopante choisie parmi des oxydes et/ou des fluorures d'éléments du groupe principal ou de groupes secondaires, dans laquelle l'oxyde, le sulfure d'oxyde ou le fluorure d'oxyde d'yttrium sont présents en une proportion de ≥ 85 % en mole par rapport au composant (a) total.

2. Composition luminescente selon la revendication 1,
**caractérisée en ce**
**que** les autres oxydes, sulfures d'oxydes ou fluorures d'oxyde sont présents en une proportion respectivement allant jusqu'à 5 % en mole, jusqu'à 3,5 % en mole ou jusqu'à 2 % en mole par rapport au composant (a) total.

3. Composition selon la revendication 2,
**caractérisée en ce**
**que** les autres oxydes, sulfures d'oxyde ou fluorure d'oxyde sont choisis parmi des sulfures d'oxyde ou des fluorures d'oxyde d'erbium, d'ytterbium et d'au moins un autre élément, en particulier du lutétium, du gadolinium, de l'holmium, du thulium, du dysprosium et/ou de l'europium.

4. Composition selon l'une des revendications 2 ou 3, **caractérisée en ce qu'**elle contient un fluorure comme substance dopante,
et/ou **en ce qu'**elle contient un métal alcalino-terreux et/ou un élément du groupe secondaire, de préférence du calcium, du zinc et/ou du titane, comme substance dopante,
dans laquelle les substances dopantes se présentent en particulier en une proportion allant respectivement jusqu'à 1 % en mole par rapport au composant (a) total.

5. Composition selon l'une des revendications 1 à 4,
**caractérisée en ce**
**que** le composant (b) contient un aluminate, éventuellement dopé avec des ions de métal de transition et/ou lanthanides,
en particulier un aluminate d'ions alcalino-terreux, d'ions de métal de transition et/ou d'ions lanthanides, de préférence un aluminate de baryum ou de magnésium ou un aluminate d'yttrium, éventuellement dopé avec des ions Eu, Mn, Th et/ou Cr.

6. Composition selon l'une des revendications 1 à 5,
**caractérisée en ce**
**que** le composant (b) est présent en une proportion en poids de 1 à 30 %, de 5 à 20 % ou de 8 à 12 % par rapport au poids total de (a) et (b).

7. Composition selon l'une des revendications 1 à 6, **caractérisée en ce que** les composants (a) et/ou (b) sont présents sous forme cristalline,
et/ou **en ce que** les composants (a) et (b) sont présents sous forme de particules, en particulier avec une taille de particules moyenne de 50 nm à 100 µm.

8. Composition selon l'une des revendications 1 à 7, **caractérisée en ce que** le composant (a) peut être excité avec un rayonnement IR dans la plage de 850 à 1500 nm, en particulier de 920 à 1000 nm, pour la luminescence
et/ou le composant (b) peut être excité avec un rayonnement UV dans la plage de 350 à 420 nm, en particulier de 380 à 410 nm pour la luminescence.

9. Utilisation d'une composition luminescente selon l'une des revendications 1 à 8 pour le marquage de substances ou de mélanges de substances, dans laquelle en particulier au moins une composition luminescente peut être intégrée comme mélange ou comme modèle dans la substance ou le mélange de substances ou appliquée sur ceux-ci.

10. Procédé de détection de la présence d'une composition luminescente, comprenant les étapes suivantes
(i) l'utilisation d'une composition luminescente selon l'une des revendications 1 à 8, pour le marquage de substances ou de mélanges de substances, dans lequel en particulier au moins une composition luminescente est intégrée comme mélange ou comme modèle dans la substance ou le mélange de substances ou appliquée sur ceux-ci, et
(ii) la détection de la présence de la composition luminescente, dans lequel en particulier une composition luminescente est détectée avec un spectre d'émission caractéristique par un système de lecture adapté à cette fin.

11. Procédé selon la revendication 10,
**caractérisé en ce**
**que** les composants (a) et (b) de la composition sont excités respectivement séparément par irradiation avec une longueur d'ondes dans la plage IR et par irradiation avec une longueur d'ondes dans la plage UV pour la luminescence et le rayonnement d'émission des composants (a) et (b) est détecté séparément,
dans lequel le composant (a) est excité de préférence par irradiation avec une longueur d'ondes dans la plage d'environ 850 à 1500 nm, en particulier d'environ 920 à 1000 nm,
et/ou le composant (b) est excité de préférence par irradiation avec une longueur d'ondes dans la plage de 350 à 450, en particulier de 380 à 410 nm, et dans lequel le rayonnement d'émission est détecté de préférence dans une plage de 300 à 1700 nm, en particulier de 350 à 1000 nm.

12. Procédé selon la revendication 11,
**caractérisé en ce**
**que** le composant (a) est excité par irradiation avec un laser IR, en particulier avec une puissance de 10 à 100 mW,
et/ou en ce que le composant (b) est excité par irradiation avec un laser UV, en particulier avec une puissance de 5 à 30 mW.

13. Procédé selon la revendication 11 ou 12, **caractérisé en ce que** l'irradiation du composant (a) et du composant (b) s'effectue séquentiellement, dans lequel de préférence le composant (a) est irradié tout d'abord et ensuite, le composant (b).

14. Système de lecture pour la détection d'un marquage luminescent comprenant une composition selon l'une des revendications 1 à 8, dans une substance ou un mélange de substances, contenant :
(i) une première source de rayons dans la plage IR,
(ii) une deuxième source de rayons dans la plage UV,
(iii) éventuellement un capteur de contact pour l'activation des première et deuxième sources de rayons par contact du système de lecture avec une substance ou un mélange de substances et
(iv) au moins un élément de détection optique pour la détection sélective de lignes d'émission ou de marquage luminescent spécifiques, dans lequel l'élément de détection couple en particulier un module CCD à un spectromètre.

15. Procédé de détection d'un marquage luminescent comprenant une composition selon l'une des revendications 1 à 8, dans une substance ou un mélange de substances, comprenant les étapes suivantes :
(a) la mise à disposition d'une substance ou d'un mélange de substances qui doit être testé(e) pour déterminer la présence d'un marquage luminescent comprenant une composition luminescente selon l'une des revendications 1 à 8,
(b) l'irradiation de la substance ou du mélange de substances avec une première source de rayonnement dans la plage IR et une deuxième source de rayonnement dans la plage UV, pour générer un rayonnement d'émission de composants excitables par IR et UV du marquage luminescent,
(c) la détection séparée des rayonnements d'émission générés et
(d) la détermination d'un signal de mesure issu des rayonnements d'émission détectés ou d'un signal obtenu par des mesures cryptographiques et éventuellement, comparaison du signal avec un modèle prédéterminé.

16. Substance ou mélange de substances, dans lequel une composition luminescente selon l'une des revendications 1 à 8 est intégrée ou sur laquelle/lequel une composition luminescente est appliquée.

17. Substance ou mélange de substances selon la revendication 17,
dans lequel la composition selon l'une des revendications 1 à 8 est contenue en une proportion de 10 à 2000 ppm dans la substance ou le mélange de substances.
